(19) Europäisches Patentamt
European Patent Office
Office européen des brevets

(11) **EP 3 671 105 B1**

(12) **EUROPEAN PATENT SPECIFICATION**

(45) Date of publication and mention
of the grant of the patent:
**02.03.2022 Bulletin 2022/09**

(21) Application number: **18214623.3**

(22) Date of filing: **20.12.2018**

(51) International Patent Classification (IPC):
*G01B 5/02* *(2006.01)*   *G01B 7/02* *(2006.01)*
*G01B 3/22* *(2006.01)*   *G01D 3/036* *(2006.01)*
*G01D 5/22* *(2006.01)*

(52) Cooperative Patent Classification (CPC):
**G01B 3/22; G01B 5/02; G01B 7/02; G01D 3/0365;**
G01D 5/2291

(54) **MOTORIZED LINEAR GAUGE AND METHOD FOR MEASURING A DIMENSION OF A WORKPIECE**

MOTORISIERTES LINEARES MESSGERÄT UND VERFAHREN ZUM MESSEN EINER ABMESSUNG EINES WERKSTÜCKS

JAUGE LINÉAIRE MOTORISÉE ET PROCÉDÉ DE MESURE D'UNE DIMENSION D'UNE PIÈCE À USINER

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.06.2020 Bulletin 2020/26**

(73) Proprietor: **TESA Sàrl**
**1020 Renens (CH)**

(72) Inventors:
• **Foletti, Vasco**
**1004 Lausanne (CH)**

• **Pirkl, Werner**
**1375 Penthéréaz (CH)**

(74) Representative: **P&TS SA (AG, Ltd.)**
**Avenue J.-J. Rousseau 4**
**P.O. Box 2848**
**2001 Neuchâtel (CH)**

(56) References cited:
**US-A- 5 205 047      US-A- 5 414 940**
**US-A1- 2015 355 152**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

Field of the invention

The present invention concerns linear gauging using an axial movement to measure position or length. In particular, it relates to automated measurements which can be integrated into production processes.

Description of related art

Linear gauges are known and widely used to measure position or linear dimensions and can be of contact or non-contact type. Contact linear gauges generally measure the axial displacements of a feeler that is in contact with a workpiece. A stationary spring forces the feeler to contact the measured surface. Two types of contact linear gauges can be distinguished, based on the position transducer that is used. In one type a position encoder sliding on a scale measures axial displacements over an extended range. The encoder can be of optical, capacitive, magnetic or inductive type. The second type uses inductive transducers, referred to as LVDT (Linear Variable Differential Transformers) or HB (Half-bridge), and is suitable for small measure ranges. EP1125097A1 describes an inductive transducer whose windings can be configured either as LVDT or HB or other alternatives. Non-contact type linear gauges can be based on optical interferometry, time-of-flight or other techniques.

The variable transformer type gauges comprise a spindle carrying a feeler at one end for touching the workpiece and a ferromagnetic core at the other end, which slides axially inside two windings in series. The voltage induced in each winding by a primary coil is proportional to the position of the ferromagnetic core inside the respective winding. This technique can yield precise measurements with an accuracy that is typically a fraction $10^{-3}$ of the total displacement. The measure range, however, is limited by the length of the windings and is of the order of a few mm.

Due to their small size and high precision, variable transformer type gauges are often used in multi-gauging applications to measure simultaneously several linear dimensions of a workpiece during the processes of machining, assembly or quality assurance. For this purpose, several gauges are mounted on a frame and brought into contact with the workpiece. EP2402714 describes such a system where the battery-operated gauges are controlled remotely via a wireless interface. In an automated system, the gauges are retractable - to avoid damage during machining or to insert/remove the workpiece. Typically, a pneumatic system is used with individual tubing for each gauge which is placed in an appropriate housing. The application of a vacuum retracts the gauge from the workpiece while in the absence of vacuum a spring displaces the gauge towards the workpiece so that it is within the measure range of the feeler. Alternately, a spring can be used to retract the gauge while application of air pressure pushes it out towards the workpiece.

However, such pneumatic gauges can have only two positions: in or out. Intermediate positions, to adapt to different workpiece geometries, for example, are not possible. Moreover, the spring pressing the feeler against the workpiece causes the contact force to increase in proportion to the displacement of the feeler. The accuracy of the measurement is degraded due to the fact that the contact force is not constant over the measure range. The higher contact force, at maximum displacement, can also damage the surface of sensitive materials.

A pneumatic system to equalize the contact force for all displacements is described in US5414940. In this embodiment the probe is pressed into contact with the workpiece by air pressure applied to a piston, instead of the action of a spring. As the piston pushes the probe towards the workpiece, a stationary spring which is operatively coupled between the piston and the housing is compressed and provides a counter-force to the air pressure. The residual force, that is the difference of the air pressure and the spring force, determines the contact force exerted by the probe on the workpiece. It is maintained substantially constant by adjusting the air pressure as a function of the displacement of the probe.

However, a pneumatic-based system is cumbersome as it requires individual tubing for each gauge and the availability of pressurized air or vacuum.

In addition, to assure constant force each gauge must be provided with a pressure transducer so that the air pressure is adjusted as a function of probe displacement. As the contact force is given by the difference of two substantially higher forces, controlling such a system requires extensive measurements to characterize and fit both the spring force and the pressure transducer as a function of probe displacement, as described in US5414949.

US5205047 discloses a gauge for measuring an inner diameter with an axial actuator driven by a cam. US20150355152 discloses a tool for determining snow stability and structure, with an accelerometer, a temperature sensor, a humidity sensor

Brief summary of the invention

An aim of the invention is to provide a linear gauge that is exempt from, or at least mitigates, the drawbacks of knowns linear gauges, notably for measuring a linear dimension of a workpiece during the processes of machining, assembly or quality assurance.

According to the invention, these aims are achieved by means of a motorized linear gauge of claim 1, and the method of claim 17. Dependent claims describe particular advantageous embodiments.

This solution provides a simple linear gauge whose position can be adjusted automatically to the workpiece and which can measure a linear dimension of an object.

In fact, the motorized linear gauge requires neither individual tubing, nor the availability of pressurized air or vacuum sources. In particular, notably wherein the motorized actuator comprises an electrical stepper motor or a piezoelectric linear motor, the linear gauge requires uniquely an electrical power source, generally available at each production site.

Moreover, this solution provides a linear gauge providing a measure of a linear dimension of an object, notably of a workpiece being machined, assembled or checked for quality assurance, with a constant, predetermined contact force.

Brief Description of the Drawings

The invention will be better understood with the aid of the description of an embodiment given by way of example and illustrated by the figures, in which:

Figs. 1 and 2 show a view of a linear gauge according to the invention, wherein the feeler tip is in a retracted position (Fig.1) and in an extended position (Fig. 2);

Figs. 3a - 3c schematically show steps for measuring a dimension of a workpiece by means of the linear gauge of Figs 1 and 2.

Fig. 4 details an exemplary process of making a measurement with constant force.

Detailed Description of possible embodiments of the Invention

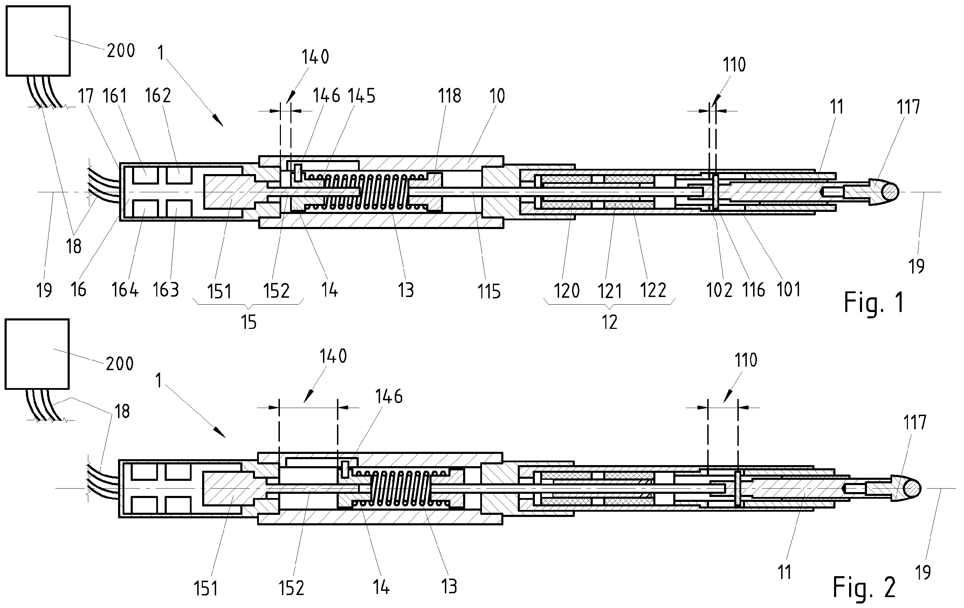

The Figure 1 and 2 show a motorized linear gauge 1 for measuring a dimension of an object 2, notably of a workpiece being machined, assembled or checked for quality assurance.

The motorized linear gauge 1 comprises a housing 10 and a feeler 11 for contacting a workpiece 2, the feeler being slideably connected to the housing 10 and moveable along a measure direction 19.

The housing 10 is configured to be mounted on a reference support so as to provide a dimension of a stationary object (i.e. being stationary with respect to this support) by providing a relative position of a surface thereof.

The motorized linear gauge 1 then comprises a mechanical bias element 13 being moveable (translatable) with respect to the housing 10 along the measuring direction. The mechanical bias element is configured (arranged) to apply an axial bias force on the feeler 11 and an equal and opposite force on a support 14, the support 14 being moved along the measure direction 19 by a motorized actuator 15.

Figure 1 shows the linear gauge 1 with a feeler fully retracted, while Figure 2 shows the linear gauge with the feeler maximally extended. The travel range of the feeler is determined by means of:

a (maximal extension) stop 101 of (attached to) the body 10 and acting on a portion 116 of the feeler, and a (minimal extension) stop 102 of (attached to) the body 10 and acting on a portion 116 of the feeler, notably on a same portion.

The precision measure range of the probe, as given by the first transducer 12, can be a fraction of the travel range. However, the first transducer 12 can be configured to provide a coarse position information over the entire travel range of the probe.

The illustrated motorized linear gauge then includes a logic circuit 162 for determining a contact force between the feeler 11 and the workpiece 2 based on the position 110 of the feeler 11 and on the position 140 of the support 14.

In particular, the contact force can be determined based on the (compressed) dimension of the bias element along the measure direction. The dimension of the bias element is derivable by the position 110 of the feeler 11 and on the position 140 of the support 14, notably based on the difference between these positions.

In case of a bias element having an elastic constant k (e.g. an helicoidal spring with spring constant k), the contact force F is proportional to the difference between the positions of the support and of the feeler along the measure direction , i.e.

$$F = k( d_T - d_N ),$$

where $d_T$ is a relative position of the feeler (e.g. feeler tip) and $d_N$ is the relative position of the support (e.g. nut) along the measure direction.

In case of a bias element with a non-constant elastic property, the contact force F can be determined by a mathematical formula and/or a look-up table providing the estimated and/or measured contact force based on the relative position of the feeler (e.g. feeler tip) and on the relative position of the support, notably on the differences between the positions of the support and of the feeler along the measure direction.

The relative position 110 of the feeler with respect to the housing is provided by a first position transducer 12, 121, 122. The first position transducer can thus be configured to provide to the logic circuit 162:

an electrical signal based on the relative position 110 of the feeler 11 with respect to the housing 10; and/or a digital data representing the relative position 110 of the feeler 11 with respect to the housing 10.

The first position transducer can be an optical, capacitive, magnetic or inductive transducer (e.g. encoder).

In case of a motorized linear gauge 1 dimensioned for precision over a small measure range, the first position transducer can be an inductive transducer, such as an LVDT (Linear Variable Differential Transformers) or a HB (Half-bridge).

In the embodiment of Figs. 1 and 2, the first position transducer relies on a Half-bridge inductive transducer comprising a ferrite core 122 attached to (a portion of) the feeler, and two solenoidal coils 120, 121 attached to (a portion) of the housing. In particular, the ferrite core 122 is fixed on an elongated portion (e.g. the shaft 115 onto which the feeler tip 117 is fixed ) of the feeler.

The mechanical bias element can comprise one or more elastic elements, such as an elastomer or a spring (i.e. an elastic element storing mechanical energy), the one or more elastic elements operating along the measure direction 19 (i.e. configured to store mechanical energy along the measure direction 19). In the illustrated embodiment, the mechanical bias element comprises a helical spring 13 operating along the measure direction 19.

As illustrated in figures 1 and 2, the support 14 is translated along the measure direction 19 by means of the motorized actuator 15.

In particular, the support 14 can be translated by a leadscrew 152 operating along the measure direction 19, i.e. having a rotating axis positioned along and coaxial to the measure direction 19. The support 14 can thus be slideably-mounted within the housing, and be provided with a threaded portion 145 configured to cooperate with the leadscrew 152. The support 14 is prevented from rotating with the leadscrew by means of a guiding pin 146 sliding in a slot parallel to the measure direction that is provided on the inner wall of the housing. The leadscrew can be actuated in rotation by an electrical motor, such as a brushless DC motor, preferably a stepper motor or a brushed DC motor a with position feedback.

In the illustrated embodiment, the bias element (i.e. the helicoidal spring 13) is placed at the opposite end of the shaft 115 from the feeler and is fixed to the support 14 at one end and to the piston 118 at the other end, the piston 118 being fixed to the shaft 115. The motor 151 can thus rotate the leadscrew 152 driving, i.e. translating, the support 14 whose rotation is blocked by a pin 146. The translation of the support 14 presses on the bias element 13 to displace it and the shaft 115 outwards. The bias element would then be translated until the feeler contacts a stationary surface or it reaches its maximal extension (e.g. until the stop 101 enters in contact with the protuberance 116 of the feeler). After entering in contact or the reaching the maximal extension, a further translation of the support by a rotation of the leadscrew will cause a compression of the bias element that increases the contact force between the feeler tip and the object (or the stop 101). When the motor rotation is reversed, the support is retracted along the measure direction and the bias element and the (shaft of) the feeler are pulled back until the minimal extension (e.g. until the stop 102 enters in contact with the protuberance 116 of the feeler).

Alternatively or complementarily, the motorized actuator can comprise a piezoelectric linear motor.

The position 140 of the support 14 relative to the housing 10 is provided by a position sensing unit 161.

The position sensing unit 161 can comprise a second position transducer for determining the position 140 of the support 14 relative to the housing 10. The second position transducer can be an optical, capacitive, magnetic or inductive transducer, e.g. an encoder. In particular, the second position transducer can be an inductive transducer, such as an LVDT (Linear Variable Differential Transformers) or a HB (Half-bridge).

In the illustrated embodiment, the position sensing unit 161 can comprise a step counter for counting the number of rotating steps provided by the stepper motor 15, e.g. by providing the number of rotating steps being accumulated from a given angular position of the step motor and/or from a given position of the support. Alternatively, or complementarily, the position sensing unit 161 can comprise an angular transducer for determining an angular position of the leadscrew 152. In particular, the angular transducer can provide, in combination with the step counter, a greater precision as it can avoid errors caused by motor slippages.

In case of a use of a brushed DC motor a with position feedback, the position sensing unit 161 can comprise a motor angular position reader for reading the position feedback provided by the brushed DC motor.

In case of a motorized actuator comprising a piezoelectric linear motor, the position sensing unit 161 can comprise a vibration counter configured to count the number of expanding cycles provided by the piezoelectric linear moto, e.g. by providing the number of expanding cycles being accumulated from a given position of the support.

In particular, the position sensing unit 161 can thus be configured to provide to the logic circuit 162 an electrical signal or digital data indicating the relative position 140 of the support 14 with respect to the housing 10 based on data or signals provided by: the second position transducer, and/or the angular transducer, and/or the step counter, and/or the motor angular position reader and/or the vibration counter.

The motorized linear gauge of Figure 1 and 2 further comprises a control unit 164 acting on the motorized actuator 15, notably based on electrical signals provided by the first position transducer 12, 121, 122 and/or by the position sensing unit 161. Advantageously, the control unit 164 can be configured to control the motorized actuator 15 so as to contact the object 2 with a predefined contact force. Advantageously, the control unit 164 can be configured to control the motorized actuator 15 so as to keep the contact force at a constant predetermined value in the range 0.1-2N. Advantageously, the control unit 164 can be configured to stop the movement of the support when the feeler reaches its maximal or minimal extension.

In order to assure a correct determination and/or measure of the contact force exerted on the object 2, even in case the measure direction 19 is not horizontal (i.e. perpendicular to the direction of the force of gravity), the linear gauge 1 can be configured to detect and/or measure the angular positioning of the measure direction 19 with respect to the direction of the force of gravity.

The linear gauge 1 can thus comprise an accelerometer 163 for measuring a gravity acceleration, wherein the logic circuit 162 is further arranged to correct the contact force based on the measured gravity acceleration.

In particular, the accelerometer can be configured to provide to the logic circuit 162:

an electrical signal based on the relative angular position of the linear gauge with respect to the direction of the gravity force, and/or
a digital data representing the relative angular position of the linear gauge with respect to the direction of the gravity force.

The accelerometer 163 can be a mono-dimensional (1D) accelerometer measuring a gravity acceleration along a given direction, preferably said given direction being parallel (or perpendicular) to the measure direction 19.

The accelerometer 163 can be a multi-dimension accelerometer (e.g. 2D or 3D) providing an angular positioning of the linear gauge 1, preferably of the measure direction thereof, with respect to the direction of the force of gravity.

The described solutions not only provide a more simplified linear gauge (i.e. devoid of tubing and of pneumatic/vacuum sources), but also permit to realize a more compact linear gauge than pneumatic-based ones. In fact, the stepper motor can be fitted within a 8mm diameter cylindrical housing.

The position sensing unit 161, the logic circuit 162 and/or the control unit 164 can comprise dedicated electronic circuit and/or can share common electronic circuit, wherein the dedicated and/or shared electronic circuit can comprise one or more readable storage medium and one or more programmable unit(s), such as microprocessor, a microcontroller, a Digital Signal Processor, a FPGA.

In the illustrated embodiment, the linear gauge 1 comprises an electronic circuit 16 enabling the position sensing unit 161, the logic circuit 162 and/or the control unit 164. Moreover, the electronic circuit 16 comprises the accelerometer 163. Advantageously, the electronic circuit 16 can comprise a programmable unit and a readable storage medium having recorded thereon a sequence of instructions, the sequence of instruction being configured to enable the position sensing unit 161, the logic circuit 162 and/or the control unit 164 when the sequence of instruction is executed on the programmable unit.

The electronic circuit 16 can be connected to a remote interface or monitor 200. The interface or monitor 200 can be a dedicated unit, a computer, a laptop or other similar device. This connection (data link) provides a display of the measurements and allows commands to be entered remotely.

The electronic circuit 16 can be enclosed in a protecting casing 17, notably for protecting against dust and liquids (e.g. watertight or airtight casing). The protecting casing can enclose a power source for powering the electronic circuit 16, i.e. for powering the position sensing unit 161, the logic circuit 162, the control unit 164, the accelerometer 163 and the actuator 15.

In addition to a power source, such as a battery, the housing 17 can comprise a wireless communication providing a (bidirectional) wireless communication to the remote user interface or monitor 200

Alternatively, the electronic circuit 16 can be connected by cable 18 to the remote interface 200. The wired link allows commands to be entered remotely, measurements to be displayed as well as power to be provided to the components of the motorized linear gauge 1.

The control unit 164 and/or the logic circuit 162 can be arranged to switch off the power to the motor 151 and/or the electronics elements in order to save energy and to reduce the thermal load. In particular, based on a detection of a non-usage of the motorized linear gauge, the logic circuit 162 and/or the control unit 164 can selectively switch off the motorized actuator 15 and/or the first position transducer and/or the position sensing unit. The non-usage status can be detected based on determined contact force, on determined position of the feeler relative to the housing, on determined position of the support relative to the housing (10), and/or on a lack of variations thereof.

The probe can be equipped with one or more temperature and/or humidity sensors. Such sensors can be placed on the housing 10, the supports 14 or 118, or on the coils 120, 122 to determine the temperature of the probe and the relative humidity of the air. If the temperature and/or the humidity are outside the tolerance limits for accurate measurements, the controller can issue a warning to the user (e.g. a warning signal to be sent to the remote user interface). The logic circuit 162 can also compensate, i.e. correct, the measurements for temperature and/or humidity variations that are outside the tolerance limits of the probe calibration. The correction factors can be calculated or measured in advance and stored in a look-up table in the logic circuit 162 or memory unit.

The described motorized linear gauge 1 permits an integration into production (e.g. in-process measurement) and/or quality assurance processes.

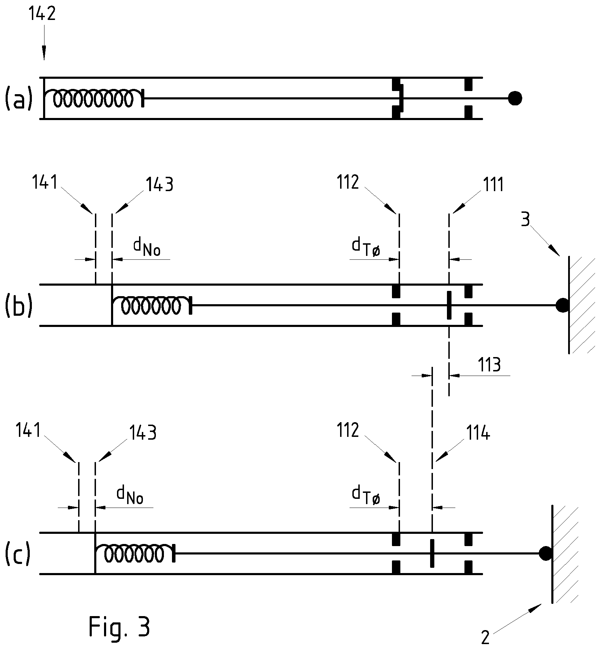

An exemplary method for an in-process measurement of a dimension of a workpiece 2 by means of one of the above-described linear gauge (1) is illustrated in Figures 3a-3c.

First, the user determines the contact force $f_0$ that is to be applied for the measurements and enters it on the user interface 200. The logic circuit 162 then calculates the corresponding compression $d_{N0}$ of the elastic element 13 with a known constant $k_0$.

$$d_{N0} = f_0 / k_0 .$$

The illustrated method comprises steps of:

starting with the feeler 11 in fully retracted position (Fig. 3a)

moving the feeler 11 and the support 14 along the measure direction 19 and monitoring the position $d_T$ measured by the first transducer 12;

detecting the instant of contact when the feeler touches a reference surface 3 (cf. Figure 3b); the contact can be detected by detecting a (sudden) immobilization of the position of the feeler with respect to the housing (i.e. $d_T$ stops incrementing) while the support is moving along the measure direction 19;

continuing to move the support 14 past the contact point 141 by a distance $d_{N0}$ to position 143 so that the resulting spring compression generates the desired contact force $f_0$;

acquiring a (reference) feeler position 111 provided by the first position transducer 12, 121, 122 (cf. Figure 3b).

For purposes of illustration, the displacement $d_{T0}$ measured by the first transducer is relative to the stop 102, i.e. to the fully retracted position of the feeler, and is indicated by position 112 in Fig. 3.

These steps provide an acquisition of a (reference) position of the feeler to be used as a reference position 111 (e.g. zero position) and measured with a preset contact force $f_0$.

Once the reference position has been acquired, the support 14 and feeler 11 can be retracted to a rest position 142 (cf. Figure 3a), e.g. a position facilitating the insertion and the removal of the workpiece, preferably a position that further avoids an unwanted contact or collision with the workpiece 2 during manufacturing.

The method can then comprise measuring a dimension of the workpiece that has been inserted along the measure direction 19.

The measuring of a given dimension of the workpiece along the measure direction 19 can thus comprise:

moving the feeler 11 and the support 14 along the measure direction 19 and monitoring the position $d_T$ measured by the first transducer 12;

detecting the instant of contact when the feeler touches the workpiece 2 (cf. Figure 3c) and $d_T$ stops incrementing;

continuing to move the support 14 past the contact point 141 by a distance $d_{N0}$, to position 143, so that the resulting spring compression generates the desired contact force $f_0$; acquiring a feeler position 114 provided by the first position transducer 12, 121, 122 (cf. Figure 3c);

providing a dimension 113 of the workpiece based on the reference feeler position 111 and a position 114 of the feeler provided by the first position transducer 12, 121, 122.

After the acquisition of the position 114 of the feeler, the support 14 can be retracted to the rest position 142 (cf. Figure 3a).

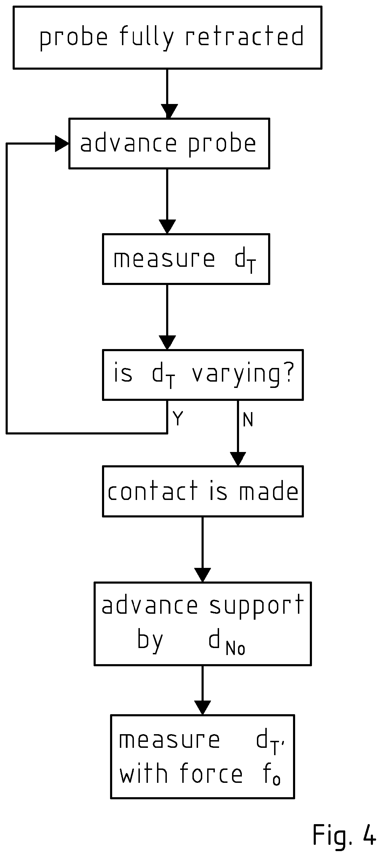

These steps are illustrated in Fig. 4 .

In order to provide an integration in a manufacturing process, the method can further comprise a repetition of the measurement of a (modified) dimension of the workpiece, each repetition notably comprising an initial step of:

moving the feeler 11 and the support 14 until the feeler makes contact with the workpiece and the support compresses the elastic element by $d_{N0}$ as described above (cf. Fig. 3c)

keeping the support fixed at position 143 to measure small variations in the dimension 113 of the workpiece by applying an approximately constant contact force.

If the selected contact force is small, e.g. 0.1 N, and the probe is not used with the measure axis 19 horizontal, then the weight of the feeler 11 and support 14 will modify the contact force. The contact force would be higher or lower than the spring force if the probe is used with the feeler pointing down or up respectively. An accelerometer 163 placed in the housing provides the inclination of the probe measure axis 19 with respect to gravity. The logic circuit 162 calculates the spring compression required to obtain the contact force $f_0$ by taking into account the weight of the feeler and the inclination of the probe.

The single measurement or the sequence of successive measurements of a given dimension of the workpiece can be executed automatically or semi-automatically. Advantageously, the electronic circuit 16 can be thus configured to execute the above-described operation of measuring a dimension. In particular, the electronic circuit can comprise a programmable unit (e.g. a microprocessor, a microcontroller, a Digital Signal Processor, a FPGA) and a (programmable unit readable) storage medium (e.g. memory unit) having recorded thereon a sequence of instructions, the sequence of instruction being configured to perform this operation of measuring when the sequence of instruction is executed on the programmable unit.

The electronic circuit 16 and the logic circuit 162 are operated at a frequency high enough to oversample the transducer outputs, for example at 1 kHz. The detection of the instant the feeler contacts a surface also requires a high sampling rate. Furthermore, the oversampled transducer signal can be averaged in the control unit in order to reduce the noise contribution to the measurement.

The electronic circuit, notably the control unit 164 can be configured to sense the feeler being at its maximal or minimal extension, e.g. by sensing a contact between the feeler and the minimal or maximal extension stop 101,102 so as to stop the movement of the support by stopping the motorized actuator.

Numerical references used in the drawings

1       Gauge
10      Housing
101     Maximal extension stop
102     Minimal extension stop
11      Feeler
110     Position of the feeler
111     Reference feeler position
112     Measured position of the feeler
113     Measured dimension
115     Shaft
116     Protuberance
117     Feeler tip
118     Support element
12      Position transducer
120     1st Winding/coil
121     2nd Winding Coil
122     Ferrite core
13      Bias element
14      Support
140     Position of the support
141     Support position at instant of contact
142     Support position fully retracted
143     Support position after compression
145     Threaded portion of support
146     Pin
15      Actuator
151     Stepper motor
152     Leadscrew
16      Electronic circuit
161     Position sensing unit
162     Logic circuit
163     Accelerometer
164     Control unit
17      Protective casing
18      (Powering and/or data-link) Cable
19      Measuring axis
2       Workpiece
3       Reference surface
200     Remote interface /monitor

**Claims**

1. A motorized linear gauge (1) comprising:

   • a housing (10);
   • a feeler (11) for contacting a workpiece (2), slideably connected to the housing (10), and moveable along a measure direction (19);
   • a first position transducer (12, 121, 122) arranged for determining a position (110) of the feeler (11) relative to the housing (10) along the measure direction;
   • a mechanical bias element (13) applying an axial bias force on the feeler (11) and an equal and opposite force on a support (14); **characterized by**
   • a motorized actuator (15) for moving the support (14) along the measure direction (19); **and by**
   • a position sensing unit (161) for determining a position (140) of the support (14) relative to the housing (10).

2. The motorized linear gauge according to claim 1, including a logic circuit (162) arranged for determining a contact force between the feeler (11) and the workpiece (2) based on the position (110) of the feeler (11) and on the position (140) of the support (14).

3. The motorized linear gauge according to claim 2, further including an accelerometer (163) for measuring a gravity acceleration along the measure direction (19), the logic circuit (162) being arranged for correcting the contact force based on the gravity acceleration.

4. The motorized linear gauge according to any one of claims 1 to 3, comprising a control unit (164) acting on the motorized actuator (15), arranged for keeping the contact force within a given interval.

5. The motorized linear gauge according to any one of claims 1 to 4, wherein the motorized actuator (15) comprises a leadscrew (152) driven by a stepper motor (151).

6. The motorized linear gauge according to claim 5, wherein the support (14) comprises a threaded portion cooperating with said leadscrew (152).

7. The motorized linear gauge according to any one of the claims 1 to 6, wherein the motorized actuator (15) comprises a piezoelectric linear motor.

8. The motorized linear gauge according to any one of the claims 1 to 7, wherein the position sensing unit comprises:

a second position transducer for determining the position (140) of the support (14) relative to the housing (10), or

an angular transducer for determining an angular position of the leadscrew (152); or

a step counter for counting the number of rotating steps provided by the stepper motor (151); or

a vibration counter for counting the number of expanding cycles provided by the piezoelectric linear motor.

9. The motorized linear gauge according to any one of claims 1 to 8, wherein the mechanical bias element (13) comprises a helical spring (13) operating along the measure direction (19).

10. The motorized linear gauge according to any one of claims 1 to 9, wherein first and/or the second position transducer comprises an inductive linear transducer; preferably said inductive linear transducer being a linear variable differential transformer or a half-bridge transducer (120, 121, 122).

11. The motorized linear gauge according to any one of claims 1 to 10, comprising a power source to provide electrical power to all probe components.

12. The motorized linear gauge according to claim 11 comprising a bidirectional wireless interface to communicate with a remote user interface or monitor (200)

13. The motorized linear gauge according to any one of claims 1 to 12, wherein the motorized linear gauge is configured to selectively switch off the motorized actuator (15) and/or the first position transducer and/or the position sensing unit, notably for reducing thermal dissipation and/or for energy saving; preferably by means of the control unit 164 and/or the logic circuit (162).

14. The motorized linear gauge according to any one of claims 1 to 13, comprising:

one or more temperature sensors to measure a temperature of the motorized linear gauge, and/or

one or more humidity sensors to measure the relative humidity of the air.

15. The motorized linear gauge according to claim 14, wherein, based on a temperature provided by said one or more temperature sensors and/or based on a relative humidity provided by said one or more humidity sensors:

the logic circuit (162) being arranged for correcting the contact force; and/or

the position sensing unit (161) being arranged for correcting the position (140) of the support (14) relative to the housing (10); and/or

the first position transducer (12, 121, 122) being arranged for correcting the position (110) of the feeler (11) relative to the housing (10); and/or

the controller being arranged to transmit a warning signal to the remote user interface or monitor (200).

16. The motorized linear gauge according to any one of claims 1 to 15, wherein the first position transducer output is sampled at high frequency, namely higher than 1 kHz.

17. A method for measuring a dimension of a workpiece (2) by means of a motorized linear gauge (1) according to any one of claims 1 to 16, the method comprising steps of:

moving the feeler along the measure direction (19) until the feeler contacts a reference surface (3);

moving the support (14) further by a preset distance to obtain desired contact force;

acquiring a reference feeler position (111) provided by the first position transducer (12, 121, 122) ;

retracting the support (14) and feeler to a rest position (142);

inserting a workpiece (2) along the measure direction (19);

moving the feeler (11) and support (14) until the feeler contacts the workpiece (2);

moving the support (14) further by a preset distance to obtain desired contact force;

providing a dimension of the workpiece based on the reference feeler position (111) and a position (114) of the feeler provided by the first position transducer (12, 121, 122).

**Patentansprüche**

1. Motorisiertes lineares Messgerät (1), aufweisend:

• ein Gehäuse (10);
• einen Taster (11) zum Berühren eines Werkstücks (2), verschiebbar mit dem Gehäuse (10) verbunden, und bewegbar entlang einer Messrichtung (19);
• einen ersten Positionswandler (12, 121, 122) ausgelegt zum Bestimmen einer Position (110) des Tasters (11) relativ zum Gehäuse (10) entlang der Messrichtung;
• ein mechanisches Bias-Element (13), eine axiale Bias-Kraft auf den Taster (11) und eine gleichgrosse und umgekehrte Kraft auf eine Stütze (14) ausübend;

**gekennzeichnet durch**

- einen motorisierten Aktuator (15) zum Bewegen der Stütze (14) entlang der Messrichtung (19); **und durch**
- eine Positionsdetektionseinheit (16) zum Bestimmen einer Position (140) der Stütze (14) relativ zum Gehäuse (10).

2. Motorisiertes lineares Messgerät gemäss Anspruch 1, beinhaltend eine Logikschaltung (162) ausgelegt zum Bestimmen einer Kontaktkraft zwischen dem Taster (11) und dem Werkstück (2) basierend auf der Position (110) des Tasters (11) und auf der Position (140) der Stütze (14).

3. Motorisiertes lineares Messgerät gemäss Anspruch 2, weiter beinhaltend einen Beschleunigungsmesser (163) zum Messen einer Schwerkraftbeschleunigung entlang der Messrichtung (19), wobei die Logikschaltung (162) zum Korrigieren der Kontaktkraft basierend auf der Schwerkraftbeschleunigung ausgelegt ist.

4. Motorisiertes lineares Messgerät gemäss einem der Ansprüche 1 bis 3, aufweisend eine Kontrolleinheit (164) einwirkend auf den motorisierten Aktuator (15), ausgelegt zum Halten der Kontaktkraft in einem vorgegebenen Intervall.

5. Motorisiertes lineares Messgerät gemäss einem der Ansprüche 1 bis 4, wobei der motorisierte Aktuator (15) ein Mutterschloss (152) angetrieben von einem Schrittmotor (151) aufweist.

6. Motorisiertes lineares Messgerät gemäss Anspruch 5, wobei die Stütze (14) einen Gewindeteil aufweist, der mit erwähntem Mutterschloss (152) zusammenwirkt.

7. Motorisiertes lineares Messgerät gemäss einem der Ansprüche 1 bis 6, wobei der motorisierte Aktuator (15) einen piezoelektrischen Linearmotor aufweist.

8. Motorisiertes lineares Messgerät gemäss einem der Ansprüche 1 bis 7, wobei die Positionsdetektionseinheit (16) aufweist:

einen zweiten Positionswandler zum Bestimmen der Position (140) der Stütze (14) relativ zum Gehäuse (10), oder
einen Winkelwandler zum Bestimmen einer Winkelposition des Mutterschlosses (152); oder
einen Schrittzähler zum Zählen der Anzahl an vom Schrittmotor (151) bereitgestellten Rotationsschritte; oder

einen Vibrationszähler zum Zählen der Anzahl an vom piezoelektrischen Linearmotor bereitgestellten Expansionszyklen.

9. Motorisiertes lineares Messgerät gemäss einem der Ansprüche 1 bis 8, wobei das mechanische Bias-Element (13) eine Schraubenfeder (13), entlang der Messrichtung (19) wirkend, aufweist.

10. Motorisiertes lineares Messgerät gemäss einem der Ansprüche 1 bis 9, wobei erster und/oder zweiter Positionswandler einen induktiven linearen Wandler aufweist;
wobei vorzugsweise erwähnter induktiver linearer Wandler ein linearer variabler Differenzialtransformator oder ein Halbbrückenwandler (120, 121, 122) ist.

11. Motorisiertes lineares Messgerät gemäss einem der Ansprüche 1 bis 10, aufweisend eine Stromquelle zum Bereitstellen von elektrischer Energie an alle Fühlerkomponenten.

12. Motorisiertes lineares Messgerät gemäss Anspruch 11, aufweisend eine bidirektionale drahtlose Schnittstelle zum Kommunizieren mit einer Remotebenutzer-Schnittstelle oder einem Monitor (200).

13. Motorisiertes lineares Messgerät gemäss einem der Ansprüche 1 bis 12, wobei das motorisierte lineare Messgerät dazu ausgelegt ist, selektiv den motorisierten Aktuator (15) und/oder den ersten Positionswandler und/oder die Positionsdetektionseinheit auszuschalten, besonders zum Reduzieren der thermischen Verlustleistung und/oder zum Energiesparen;
vorzugsweise mittels der Kontrolleinheit (164) und/oder der Logikschaltung (162).

14. Motorisiertes lineares Messgerät gemäss einem der Ansprüche 1 bis 13, aufweisend:

einen oder mehrere Temperatursensoren zum Messen einer Temperatur des motorisierten linearen Messgeräts, und/oder
einen oder mehrere Feuchtigkeitssensoren zum Messen der relativen Luftfeuchtigkeit.

15. Motorisiertes lineares Messgerät gemäss Anspruch 14, wobei, basierend auf einer von erwähnten einem oder mehreren Temperatursensoren bereitgestellten Temperatur und/oder basierend auf einer von erwähnten einem oder mehreren Feuchtigkeitssensoren bereitgestellten relativen Feuchtigkeit:

die Logikschaltung (162) zum Korrigieren der Kontaktkraft ausgelegt ist; und/oder
die Positionsdetektionseinheit (161) zum Korrigieren der Position (140) der Stütze (14) relativ zum Gehäuse (10) ausgelegt ist; und/oder der erste Positionswandler (12, 121, 122) zum Korrigieren der Position (110) des Tasters (11) relativ zum Gehäuse (10) ausgelegt ist; und/oder der Kontroller zum Übertragen eines Warnsignals zur Remotebenutzer-Schnittstelle oder zum Monitor (200) ausgelegt ist.

16. Motorisiertes lineares Messgerät gemäss einem der Ansprüche 1 bis 15, wobei der erste Positionswandlerausgang mit einer hohen Frequenz abgetastet wird, nämlich höher als 1 kHz.

17. Verfahren zum Messen eines Ausmasses eines Werkstücks (2) mittels eines motorisierten linearen Messgeräts (1) gemäss einem der Ansprüche 1 bis 16, wobei das Verfahren folgende Schritte aufweist:

Bewegen des Tasters entlang der Messrichtung (10) bis der Taster eine Referenzoberfläche (3) berührt;
Bewegen der Stütze (14) weiter um eine voreingestellte Distanz, um eine erwünschte Kontaktkraft zu erzielen;
Aufnehmen einer vom ersten Positionswandler (12, 121, 122) bereitgestellten Referenztasterposition (111);
Zurückziehen der Stütze (14) und der Tasters zu einer Ruheposition (142);
Einführen eines Werkstücks (2) entlang der Messrichtung (19);
Bewegen des Tasters (11) und der Stütze (14) bis der Taster das Werkstück (2) berührt;
Bewegen der Stütze (14) weiter um eine voreingestellte Distanz, um eine erwünsche Kontaktkraft zu erzielen;
Bereitstellen eines Ausmasses des Werkstücks basierend auf der Referenztasterposition (111) und auf einer vom ersten Positionswandler (12, 121, 122) bereitgestellten Position (114) des Tasters.

**Revendications**

1. Une jauge linéaire motorisée (1) comprenant

- un boîtier (10) ;
- un palpeur (11) destiné à entrer en contact avec une pièce d'usinage (2), relié de manière coulissante au boîtier (10), et mobile le long d'une direction de mesure (19) ;
- un premier transducteur de position (12, 121, 122) disposé pour déterminer une position (110) du palpeur (11) par rapport au boîtier (10) le long de la direction de mesure ;
- un élément de sollicitation mécanique (13) appliquant une force de sollicitation axiale sur le palpeur (11) et une force égale et opposée sur un support (14) ; **caractérisé par**
- un actionneur motorisé (15) pour déplacer le support (14) le long de la direction de mesure (19) ; et par
- une unité de détection de position (161) pour déterminer une position (140) du support (14) par rapport au boîtier (10).

2. La jauge linéaire motorisée selon la revendication 1, comprenant un circuit logique (162) agencé pour déterminer une force de contact entre le palpeur (11) et la pièce d'usinage (2) en fonction de la position (110) du palpeur (11) et de la position (140) du support (14).

3. La jauge linéaire motorisée selon la revendication 2, comprenant en outre un accéléromètre (163) pour mesurer une accélération de gravité le long de la direction de mesure (19), le circuit logique (162) étant agencé pour corriger la force de contact en fonction de l'accélération de gravité.

4. La jauge linéaire motorisée selon l'une quelconque des revendications 1 à 3, comprenant une unité de commande (164) agissant sur l'actionneur motorisé (15), agencée pour maintenir la force de contact dans un intervalle donné.

5. La jauge linéaire motorisée selon l'une quelconque des revendications 1 à 4, dans laquelle l'actionneur motorisé (15) comprend une vis-mère (152) entraînée par un moteur pas à pas (151).

6. La jauge linéaire motorisée selon la revendication 5, dans laquelle le support (14) comprend une partie filetée coopérant avec ladite vis-mère (152).

7. La jauge linéaire motorisée selon l'une quelconque des revendications 1 à 6, dans laquelle l'actionneur motorisé (15) comprend un moteur linéaire piézoélectrique.

8. La jauge linéaire motorisée selon l'une quelconque des revendications 1 à 7, dans laquelle l'unité de détection de position comprend:

un deuxième transducteur de position pour déterminer la position (140) du support (14) par rapport au boîtier (10), ou
un transducteur angulaire pour déterminer une position angulaire de la vis-mère (152) ; ou
un compteur de pas pour compter le nombre de pas de rotation fournis par le moteur pas à pas (151) ; ou
un compteur de vibrations pour compter le nombre de cycles d'expansion fournis par le moteur linéaire piézoélectrique.

9. La jauge linéaire motorisée selon l'une quelconque des revendications 1 à 8, dans laquelle l'élément de sollicitation mécanique (13) comprend un ressort hélicoïdal (13) agissant selon la direction de mesure (19).

10. La jauge linéaire motorisée selon l'une quelconque des revendications 1 à 9, dans laquelle le premier et/ou le deuxième transducteur de position comprend un transducteur linéaire inductif ; de préférence ledit transducteur linéaire inductif étant un transformateur différentiel linéaire variable ou un transducteur en half-bridge (120, 121, 122).

11. La jauge linéaire motorisée selon l'une quelconque des revendications 1 à 10, comprenant une source d'énergie pour fournir une énergie électrique à tous les composants de la sonde.

12. La jauge linéaire motorisée selon la revendication 11 comprenant une interface sans fil bidirectionnelle pour communiquer avec une interface utilisateur ou un moniteur distant (200).

13. La jauge linéaire motorisée selon l'une quelconque des revendications 1 à 12, dans laquelle la jauge linéaire motorisée est configurée pour désactiver sélectivement l'actionneur motorisé (15) et/ou le premier transducteur de position et/ou l'unité de détection de position, notamment pour réduire la dissipation thermique et/ou pour réaliser des économies d'énergie ; de préférence au moyen de l'unité de commande (164) et/ou du circuit logique (162).

14. La jauge linéaire motorisée selon l'une quelconque des revendications 1 à 13, comprenant :

   un ou plusieurs capteurs de température pour mesurer une température de la jauge linéaire motorisée, et/ou un ou plusieurs capteurs d'humidité pour mesurer l'humidité relative de l'air.

15. Jauge linéaire motorisée selon la revendication 14, dans laquelle, sur la base d'une température fournie par ledit un ou plusieurs capteurs de température et/ou sur la base d'une humidité relative fournie par ledit un ou plusieurs capteurs d'humidité :

   le circuit logique (162) étant agencé pour corriger la force de contact ; et/ou l'unité de détection de position (161) étant agencée pour corriger la position (140) du support (14) par rapport au boîtier (10) ; et/ou

le premier transducteur de position (12, 121, 122) étant agencé pour corriger la position (110) du palpeur (11) par rapport au boîtier (10) ; et/ou le contrôleur étant agencé pour transmettre un signal d'avertissement à l'interface utilisateur ou au moniteur distant (200).

16. La jauge linéaire motorisée selon l'une quelconque des revendications 1 à 15, dans laquelle la sortie du premier transducteur de position est échantillonnée à haute fréquence, soit supérieure à 1 kHz.

17. Procédé de mesure d'une dimension d'une pièce (2) au moyen d'une jauge linéaire motorisée (1) selon l'une quelconque des revendications 1 à 16, le procédé comprenant les étapes consistant à :

   déplacer le palpeur le long de la direction de mesure (19) jusqu'à ce que le palpeur entre en contact avec une surface de référence (3) ; déplacer le support (14) plus loin d'une distance prédéterminée pour obtenir la force de contact désirée ; acquérir une position de palpeur de référence (111) fournie par le premier transducteur de position (12, 121, 122) ; rétracter le support (14) et le palpeur à une position de repos (142) ; insérer une pièce (2) le long de la direction de mesure (19) ; déplacer le palpeur (11) et le support (14) jusqu'à ce que le palpeur entre en contact avec la pièce (2) ; déplacer encore le support (14) d'une distance prédéfinie pour obtenir la force de contact souhaitée ; fournir une dimension de la pièce basée sur la position de référence du palpeur (111) et une position (114) du palpeur fournie par le premier transducteur de position (12, 121, 122).

EP 3 671 105 B1

200  1  140  146 145  118  10  110  11  117

17  161  162

19  18  16  164  163  151  152  14  13  115  120 121 122  102 116 101  19

15  12

**Fig. 1**

200  1  140  146  110  117

18

151  152  14  13  11  19

**Fig. 2**

Fig. 3

```
┌─────────────────────────────┐
│     probe fully retracted   │
└─────────────────────────────┘
               │
               ▼
┌─────────────────────────────┐
│        advance probe        │◄───┐
└─────────────────────────────┘    │
               │                   │
               ▼                   │
┌─────────────────────────────┐    │
│       measure  $d_T$        │    │
└─────────────────────────────┘    │
               │                   │
               ▼                   │
┌─────────────────────────────┐    │
│     is  $d_T$  varying?     │    │
└─────────────────────────────┘    │
            Y │    │ N             │
              └────┼───────────────┘
                   ▼
┌─────────────────────────────┐
│       contact is made       │
└─────────────────────────────┘
               │
               ▼
┌─────────────────────────────┐
│      advance support        │
│      by      $d_{No}$       │
└─────────────────────────────┘
               │
               ▼
┌─────────────────────────────┐
│     measure    $d_{T'}$     │
│     with force  $f_o$       │
└─────────────────────────────┘
```

Fig. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1125097 A1
- EP 2402714 A
- US 5414940 A
- US 5414949 A
- US 5205047 A
- US 20150355152 A